Europäisches Patentamt

(19) European Patent Office

Office européen des brevets

(11) Numéro de publication: **0 061 410**

**A1**

(12) **DEMANDE DE BREVET EUROPEEN**

(21) Numéro de dépôt: **82420035.6**

(22) Date de dépôt: **17.03.82**

(51) Int. Cl.³: **F 24 D 19/10**
**F 24 D 3/00**

(30) Priorité: **19.03.81 FR 8105793**
**08.10.81 FR 8119207**

(43) Date de publication de la demande:
**29.09.82 Bulletin 82/39**

(84) Etats contractants désignés:
**AT BE CH DE FR GB IT LI NL SE**

(71) Demandeur: **Société Financière des Productions GIANOLA Société dite: Société à Responsabilité limitée**
**13 avenue de la Fontaine Couverte**
**F-74202 Thonon les Bains(FR)**

(72) Inventeur: **Loquineau, Jacques**
**2, avenue François de Sales**
**F-74200 Thonon-Les-Bains(FR)**

(74) Mandataire: **Laurent, Michel et al,**
**20 rue Louis Chirpaz Boite Postale 32**
**F-69130 Lyon-Ecully(FR)**

(54) Procédé de chauffage bi-énergie et installation pour sa mise en oeuvre.

(57) Procédé de chauffage bi-énergie avec une chaudière électrique (8), et une chaudière traditionnelle (1) à combustible liquide ou gazeux, ces deux chaudières (1) et (8) étant reliées chacune à un circuit de chauffage (4), et où on ne met en fonctionnement le brûleur (3) de la chaudière traditionnelle (1) que lorsque le foyer de celle-ci a atteint une température prédéterminée permettant d'éviter la formation des condensations corrosives dans ce foyer, *caractérisé* :

- d'une part, en ce que lorsque l'on fonctionne en régime établi avec la chaudière électrique (8), on n'irrigue pas la chaudière traditionnelle (1),

- d'autre part, en ce que avant de mettre en route le brûleur (3) de la chaudière traditionnelle (1), on réchauffe progressivement le foyer de celle-ci, de sorte qu'on amène celui-ci au niveau de ladite température prédéterminée.

L'invention concerne aussi une installation.

FIG.1

-1-

PROCEDE DE CHAUFFAGE BI-ENERGIE ET INSTALLATION POUR SA
MISE EN OEUVRE

L'invention concerne un nouveau procédé de chauffage
bi-énergie. Elle se rapporte également à une installation
pour la mise en oeuvre de ce prodédé.

Pour le chauffage; on a déjà proposé de coupler les
chaudières traditionnelles à combustible liquide, voire
gazeux, avec des chaudières électriques..C'est ce qu'on
appelle le "chauffage bi-énergie".

On sait que lorsque l'on démarre à froid le brûleur
d'une chaudière traditionnelle, il se forme des condensations de vapeur d'eau dans le foyer de la chaudière.
D'autre part, on provoque un choc thermique particulièrement néfaste pour les chaudières en fonte. Dans le
cas d'une chaudière fuel, les condensations sont corrosives en raison de l'acide sulfurique qu'elles contiennent. Ces deux phénomènes sont dangereux si l'on doit
effectuer des démarrages répétés à froid.

Par ailleurs, les combustibles liquides ou gazeux,
notamment le fuel, coûtent de plus en plus cher. Dans
le même temps, les tarifications de l'électricité deviennent de plus en plus attractives. De la sorte, les
installations de chauffage bi-énergie deviennent recherchées.

Dans la demande de brevet allemand, publie sous
le n° DOS 2 021 579, on a décrit une installation
bi-énergie dans laquelle le réchauffeur électrique
d'appoint distinct et séparé de la chaudière traditionnelle est enclenché durant la période à tarification
électrique favorable par un système de réglages appropriés, commandé par une horloge, par une sonde extérieure ou par un thermostat placé sur la chaudière. Toutefois, dans ce montage, lorsque le réchauffeur électrique
fonctionne, l'eau de retour du chauffage central
transite malheureusement en permanence par la chaudière traditionnelle. Le fait que le circuit de chauffage central traverse simultanément et en permanence les deux chaudières, provoque :

- d'une part, de grandes déperditions calorifiques tant par la surface extérieure de la chaudière traditionnelle que par l'air qui entre par le brûleur et qui s'évacue par la cheminée, bien que le brûleur soit à l'arrêt,

- et d'autre part, augmente l'inertie thermique de l'installation, ce qui nuit à la souplesse d'utilisation du système, notamment en chauffage intermittent.

L'invention pallie ces inconvénients. Elle vise un procédé de chauffage bi-énergie économique et facile à mettre en oeuvre.

Ce procédé de chauffage bi-énergie comportant :

- une chaudière électrique,

- une chaudière traditionnelle à combustible liquide ou gazeux,

. accouplées et reliées chacune au circuit de chauffage,

. du type dans lequel on ne met en fonctionnement le brûleur de la chaudière traditionnelle que lorsque celle-ci a atteint une température prédéterminée permettant d'éviter la formation des condensations corrosives dans le foyer de cette chaudière traditionnelle,

se caractérise :

- d'une part, en ce que lorsque l'on fonctionne en régime établi avec la chaudière électrique, on n'irrigue pas la chaudière traditionnelle,

- et d'autre part, en ce que avant de mettre en route le brûleur de la chaudière traditionnelle, on réchauffe progressivement le foyer de celle-ci, de sorte qu'on amène ce foyer au niveau de ladite température prédéterminée.

En d'autres termes, l'invention consiste :

- à ne fonctionner pratiquement qu'avec une seule énergie à la fois, du moins hors de la période de préchauffage du foyer de la chaudière traditionnelle,

- en outre, à réchauffer préalablement et progressivement le foyer de la chaudière traditionnelle pour éviter la formation des condensations corrosives et le choc thermique.

Avantageusement :

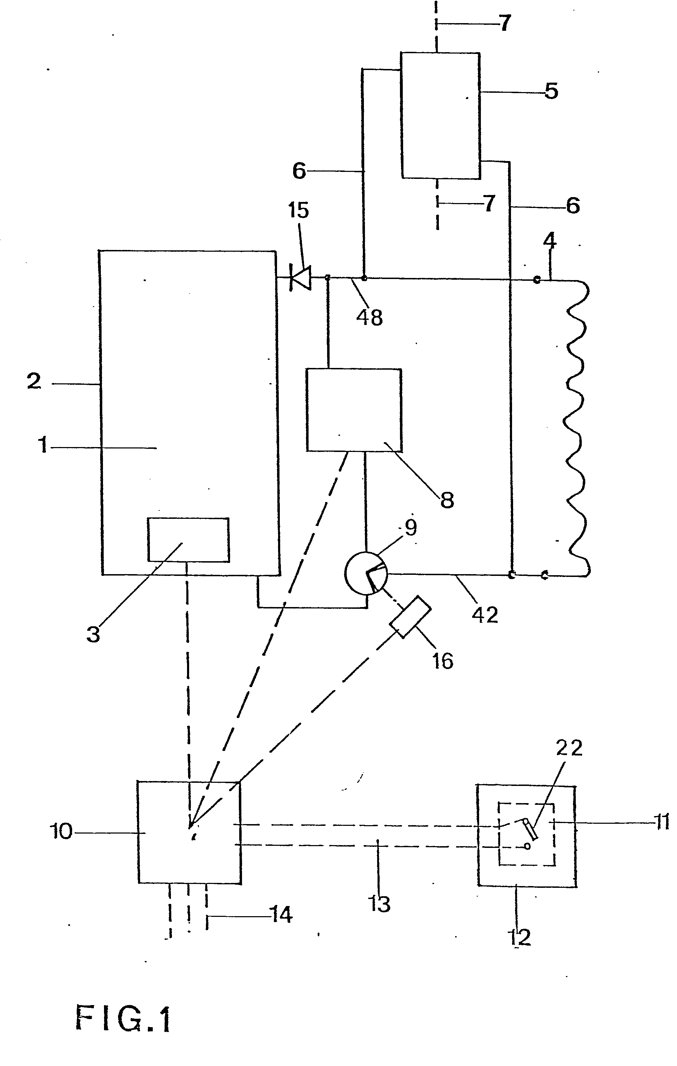

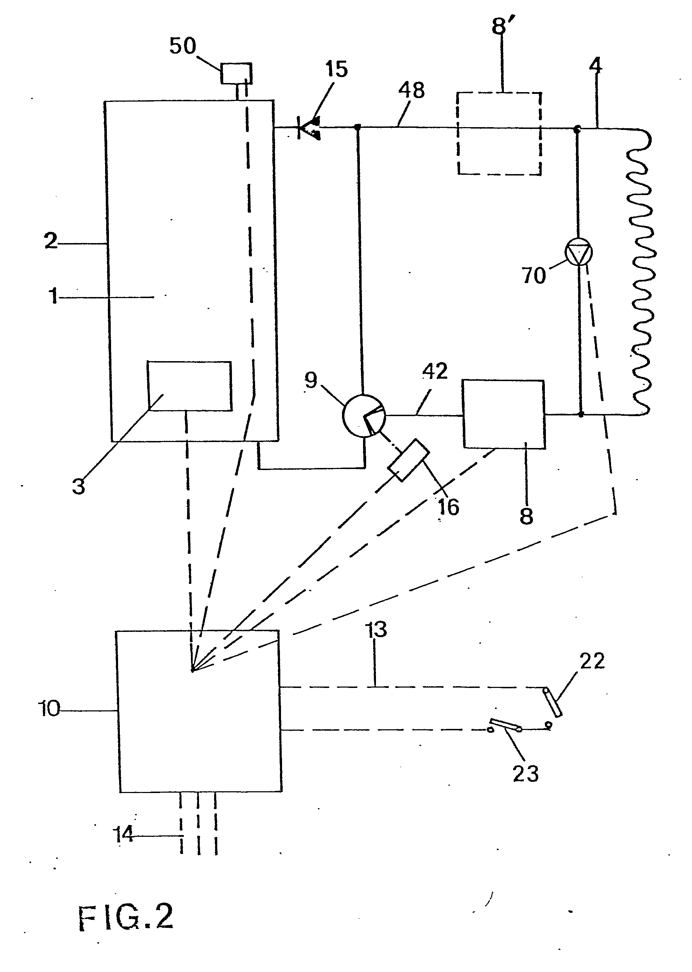

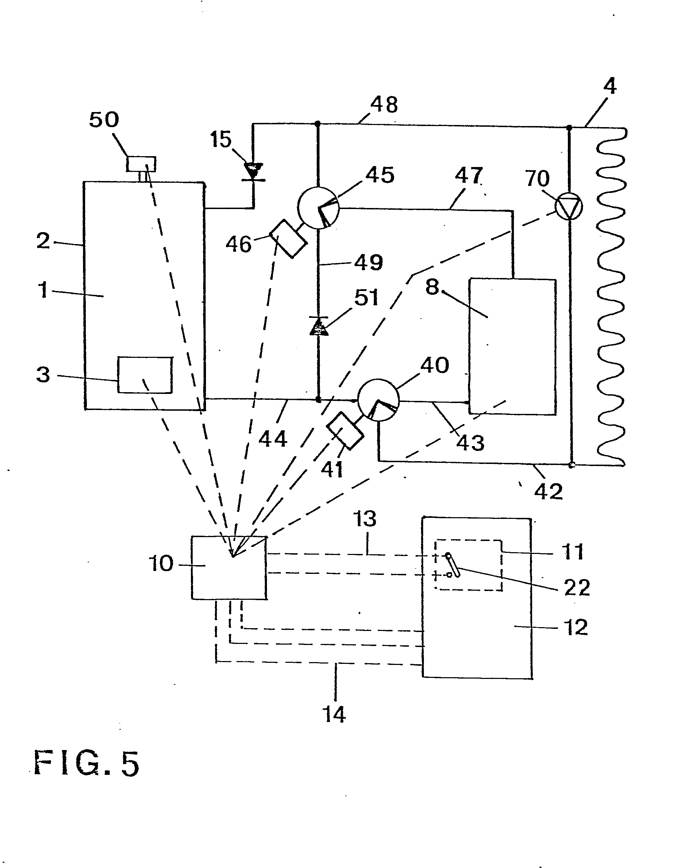

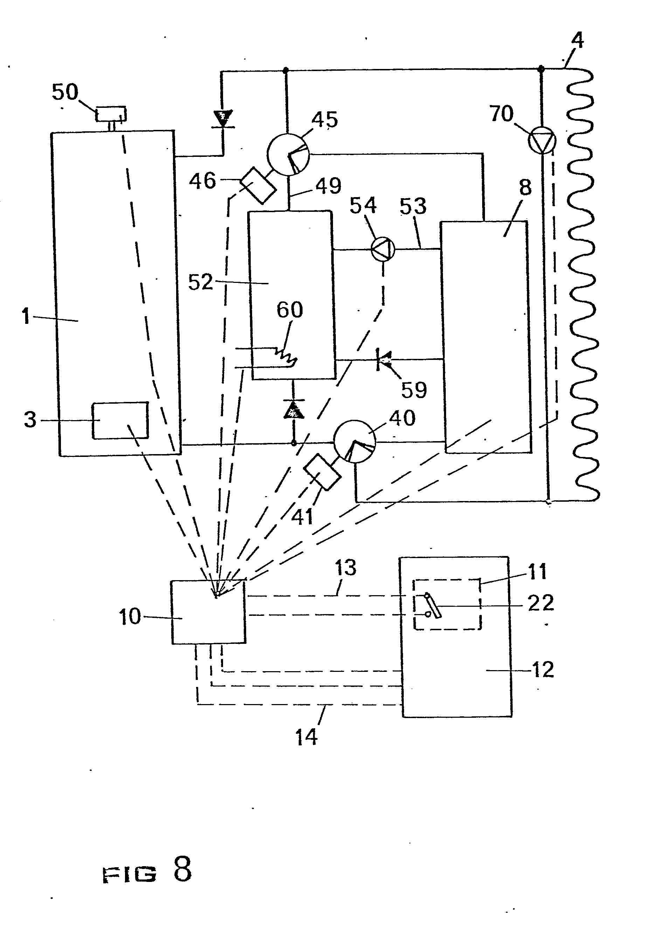

- les chaudières respectives sont placées soit en série (figure 2), soit en parallèle (figure 1), voire en configuration série parallèle (figure 5) en fonction des conditions d'utilisation, voire encore en association avec un ballon accumulateur (figure 8) tampon ;

- la chaudière électrique peut être soit à faible volume d'eau interne, soit du type à hydroaccumulation ;

- le préchauffage du foyer de la chaudière traditionnelle s'effectue :

. de préférence, en utilisant l'eau du circuit du chauffage, par ex. chauffage central ;

. en utilisant les calories de cette eau complétée par un appoint calorifique fourni par la chaudière électrique,

. en utilisant les calories issues d'un ballon accumulateur tampon chauffé par un moyen quelconque,

. en utilisant un organe approprié, autre que le brûleur, placé dans le foyer même de cette chaudière traditionnelle. ;

- la programmation du préchauffage qui intervient au changement d'énergie est commandée soit par :

. le changement de tarification du fournisseur de courant électrique éventuellement avec préavis,

. une sonde extérieure de prise de température,

. l'association de ces deux moyens,

. enfin, par l'obligation pour l'utilisateur de libérer la puissance électrique pour d'autres usages ;

- le démarrage du brûleur, après préchauffage, est commandé :

 . soit par une temporisation provoquant un décalage entre le début du préchauffage et la mise en fonctionnement du brûleur par le biais d'une horloge ou d'une minuterie,

 . soit par une prise de température à la sortie de la chaudière traditionnelle,

 . soit par une seconde impulsion du fournisseur du courant électrique dans le cas d'utilisation d'un préavis.

L'invention concerne également une installation de chauffage bi-énergie du type comprenant de manière connue :

- un circuit de chauffage proprement dit,

- une chaudière traditionnelle à combustible liquide ou gazeux reliée au circuit de chauffage,

- une chaudière électrique reliée au même circuit de chauffage,

- un organe de commande électrique qui peut être relié respectivement :

 . au brûleur de la chaudière traditionnelle,

 . à la chaudière électrique,

 . à un contact commandé par le fournisseur de courant électrique ou par l'utilisateur,

 . voire à un circulateur supplémentaire d'accélération du préchauffage,

 . à une sonde de détection de la température de la chaudière traditionnelle,

 . à une sonde de détection de la température extérieure dans le cas d'une installation de chauffage central;

- éventuellement un ballon tampon accumulateur.

Cette installation se caractérise en ce qu'elle comporte en outre :

- un système de vannes placé sur le circuit du chauffage apte à mettre :

-5-

. hors circuit la chaudière traditionnelle,

. hors circuit la chaudière électrique,

. en série l'une et l'autre des chaudières,

. en service le ballon accumulateur tampon
   optionnel ;

- un moyen de motorisation dudit système de vannes
connecté à l'organe de commande électrique, de façon à
permettre la manoeuvre automatique de ce système de
vannes et le fonctionnement du brûleur ou de la chaudière électrique, selon l'énergie et l'organe de chauffage
utilisé,

- un moyen apte à réchauffer progressivement le
foyer de la chaudière traditionnelle avant le démarrage du
brûleur de celle-ci.

En pratique :

- le système de vannes est formé par au moins une
vanne trois voies ;

- le moyen apte à réchauffer le foyer de la chaudière peut être situé soit en amont de celle-ci soit
incorporé dans celle-ci ;

- la chaudière électrique est placée sur le circuit
de retour du chauffage et est disposée juste en
en amont de cette vanne trois voies, elle-même disposée
juste en amont de la chaudière traditionnelle ;

- l'organe de commande électrique est intégré dans
l'enceinte même de la chaudière électrique.

L'emploi d'une vanne trois voies pour mettre en communication
des circuits différents est déjà connu dans le chauffage bi-énergie.
(Voir par exemple la demande de brevet allemand publiée sous le
numéro DOS 2 657.161).

L'invention concerne toutefois une combinaison de moyens connus pris isolément, mais en vue de fonctions nouvelles et originales
à savoir notamment :

. ne pas irriguer la chaudière traditionnelle lorsque
   l'on fonctionne sur la chaudière électrique

. préchauffer progressivement le foyer de la chaudière
   traditonnelle avant le démarrage du bruleur de celle-ci

Cette combinaison conduit à des résultats nouveaux que l'on ne savait pas obtenir jusqu'alors, à savoir simultanément, la suppression des déperditions par la chaudière traditionnelle lorsqu'elle n'est pas en service et que la chaudière électrique fonctionne, la réduction de l'inertie de l'ensemble, l'abscence de choc thermique et de corrosions néfastes dans la chaudière traditionnelle lorsque l'on met son brûleur en service, et enfin l'automatisme de commutation d'une chaudière sur l'autre.

Les exemples donnés à titre indicatif et non limitatif à l'appui des figures annexées montrent la manière dont l'invention peut être réalisée.

La figure 1 montre schématiquement une première forme de réalisation dans laquelle les deux chaudières sont montées en parallèle sur le circuit de chauffage, alors que la figure 2 montre schématiquement un second montage dans lequel ces deux chaudières sont disposées en série.

Les figures 3 et 4 représentent les schémas de commande électrique de ces deux formes de réalisation.

La figure 5 montre schématiquement une troisième forme de réalisation avec deux vannes multidirectionnelles et les figures 6 et 7 représentent les schémas de commande électrique de cette troisième forme de réalisation (Fig.6 sans préavis ; fig.7 avec préavis 22').

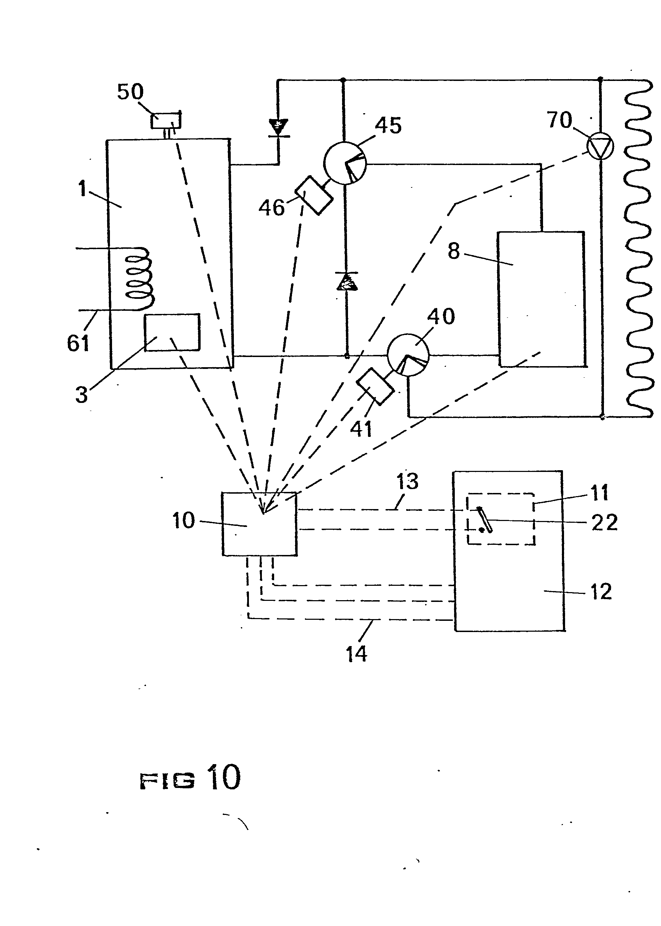

Les figures 8, 9 et 10 montrent une quatrième forme de réalisation avec ballon accumulateur tampon (fig.8), préchauffage par un système indépendant (fig.10) et le schéma électrique de commande correspondant (fig.9).

Sur les figures, les références suivantes désignent :

- (1) : une chaudière traditionnelle à combustible liquide (fuel), voire gazeux, placée dans une enceinte isolante (2) et comprenant un brûleur (3) ;

- (4) : le circuit d'eau chaude du chauffage central proprement dit, comprenant les éléments classiques non représentés : radiateurs, accumulateur, vanne de mélange, expanseur, circuit de remplissage, avec son circuit de retour (42) ;

- (70) : une pompe destinée à accélérer pendant le préchauffage la circulation dans (1) et (8) ;

- (5) : en option, un ballon de production d'eau chaude sanitaire avec son circuit de chauffage (6) branché sur le départ (48) du circuit (4) de chauffage et son circuit de consommation d'eau chaude (7) ;

- (8) : une chaudière électrique, isolée thermiquement ;

- (9) : une vanne multidirectionnelle, par exemple à trois voies, commandée par un moteur électrique asservi (16) ;

- (10) : un coffret de commande électrique, intégré ou séparé de la chaudière électrique (8) ;

- (11) : un relais situé sur le compteur électrique (12) de l'abonné ;

- (13) : le circuit électrique de commande du coffret (10) ;

- (14) : le circuit électrique de puissance (triphasé ou monophasé) du coffret (10) relié au compteur (12) ;

- (15) : un clapet anti-thermosiphon ;

- (16) : un moteur asservi.

Si on utilise le montage en parallèle (figure 1), l'installation fonctionne de la manière suivante. :

Lorsque la chaudière électrique (8) fonctionne, elle chauffe le circuit (4) et la vanne (9) empêche l'eau issue du retour (42) de passer dans l'enceinte de la chaudière traditionnelle (1). Un clapet (15) anti-thermosiphon empêche tout retour intempestif de l'eau chaude issue de (8) dans la chaudière traditionnelle (1) par le haut de celle-ci.

Inversement, lorsque la chaudière (1) fonctionne, celle-ci chauffe alors le circuit (4) et la vanne (9) empêche le passage de l'eau du retour vers (8).

La régulation de la chaudière électrique (8) et de la vanne de mélange classique non représentée située sur le circuit de chauffage central (4) est réglée de façon à ce que la température de l'eau du retour du chauffage central soit supérieure à la température dite "température prédéterminée" à laquelle se produit des condensations des gaz de combustion dans le foyer de la chaudière traditionnelle (1) lorsque le brûleur (3) se met en route et que la chaudière (1) est froide.

Dans une variante non représentée, la vanne caractéristique trois voies (9) peut être placée sur le circuit départ (48) du chauffage central (4) et plus exactement peut être permutée avec le clapet anti-thermosiphon (15). Le fonctionnement reste le même.

Lors du passage d'une tarification favorable à une moins favorable, l'impulsion envoyée dans le réseau électrique commandé le relais (11) qui ouvre un contact (22), qui alimente le coffret (10). Le circuit de puissance (14) fait alors basculer la vanne (9) pour mettre alors en relation la chaudière traditionnelle (1) avec le circuit retour (42), tout en coupant simultanément le retour (42) du chauffage central (4) vers la chaudière électrique (8) et l'alimentation électrique de celle-ci.

La mise en route du brûleur (3) est décalée par une temporisation par rapport à l'instant de commutation de cette vanne (9). Lorsque le régime de tarification devient plus favorable, une nouvelle impulsion agit sur le relais (11) et inverse instantanément le système.

En revanche, si on utilise le montage en série de la figure 2, la chaudière traditionnelle (1) est placée juste en aval de la vanne (9) et la chaudière électrique (8) peut être placée :

   - juste en amont de cette vanne,

   - ou en (8') sur le départ (48) du circuit de chauffage.

Dans ces configurations en série, on peut utiliser une temporisation pour décaler la mise en route du brûleur (3) par rapport à l'instant de la commutation. On peut aussi utiliser une sonde de détection de température (50) placée soit à l'intérieur de la chaudière traditionnelle (1), soit sur le tuyau de départ de celle-ci, cette sonde asservissant le démarrage du brûleur (3). Dans ce cas, la chaudière électrique (8) peut être avantageusement maintenue en fonctionnement jusqu'à ce que la température de la chaudière traditionnelle (1) soit atteinte.

Selon une autre variante, la commutation sur la chaudière traditionnelle (1) peut être provoquée par une sonde extérieure (23) ou par une commande à distance de changement d'énergie.

Si les puissances calorifiques respectives des deux chaudières (1) et (8) peuvent être identiques, avantageusement celle de la chaudière électrique (8) peut être inférieure. Comme la chaudière traditionnelle (1) fonctionne essentiellement pendant les grands froids, la puissance de la chaudière électrique (8) peut être avantageusement les deux tiers, voire les trois quarts de celle de la chaudière traditionnelle (1).

Sur la figure 5, les références additionnelles suivantes désignent :

- (40) : une première vanne multidirectionnelle et plus précisément une vanne à trois voies, motorisée par un moteur électrique (41) montée sur le retour (42) du circuit de chauffage central (4), connectée d'une part au circuit (43) de retour sur la chaudière électrique (8) et d'autre part, au retour (44) vers la chaudière traditionnelle (1) ;

- (45) : une seconde vanne multidirectionnelle, par exemple à trois voies, motorisée par un moteur électrique (46) et installée sur le départ (47) de la chaudière électrique (8) et connectée d'une part au départ (48) du circuit de chauffage central (4) et d'autre part au retour (44) sur la chaudière traditionnelle (1) au moyen d'une canalisation (49) ;

- (50) : une sonde réglable de prise de tempéra- ture de la chaudière traditionnelle (1) ;

- (51) : un clapet anti-thermosiphon (anti-retour).

L'installation fonctionne de la manière suivante.

En période de tarification électrique favorable,

0061410

_ 10 _

la chaudière électrique (8) chauffe le circuit de chauffage (4) à travers la vanne (45). La vanne (40) et le clapet anti-retour (15) empêchent l'irrigation de la chaudière traditionnelle (1).

La régulation de la chaudière électrique (8) est réglée de façon à ce que la température de cette chaudière (8) soit toujours supérieure à la température affichée par la sonde (50).

Lorsque le fournisseur de courant électrique change de régime de tarification, le coffret (10) fait alors basculer la vanne (45) pour mettre en série la chaudière électrique (8) et la chaudière traditionnelle (1). La chaudière traditionnelle (1) se trouve alors raccordée au circuit départ (48) du chauffage central (4). La chaudière électrique (8) continue à fonctionner, ce qui permet ainsi le préchauffage de la chaudière traditionnelle (1). Lorsque la température prédéterminée détectée par la sonde (50) est atteinte, la vanne (40) bascule pour que le circuit de retour (42) irrigue directement la chaudière traditionnelle (1) par le circuit (44) et le brûleur (3) est mis en route.

L'installation montrée à la figure 8 utilise le même montage qu'à la figure 5, complétée par un ballon tampon accumulateur (52) isolé thermiquement situé sur la tuyauterie (49). Ce ballon (52) est chauffé soit indépendamment par un élément électrique (60), soit par un circuit approprié (53) en provenance de la chaudière électrique (8) avec la pompe (54) à faible débit et clapet (59). Lors de la commutation, ce ballon (52) assure seul le préchauffage de la chaudière (1) en évitant d'utiliser la chaudière électrique (8) pendant la tarification défavorable, attendu que ce ballon (52) a été chauffé pendant la tarification favorable.

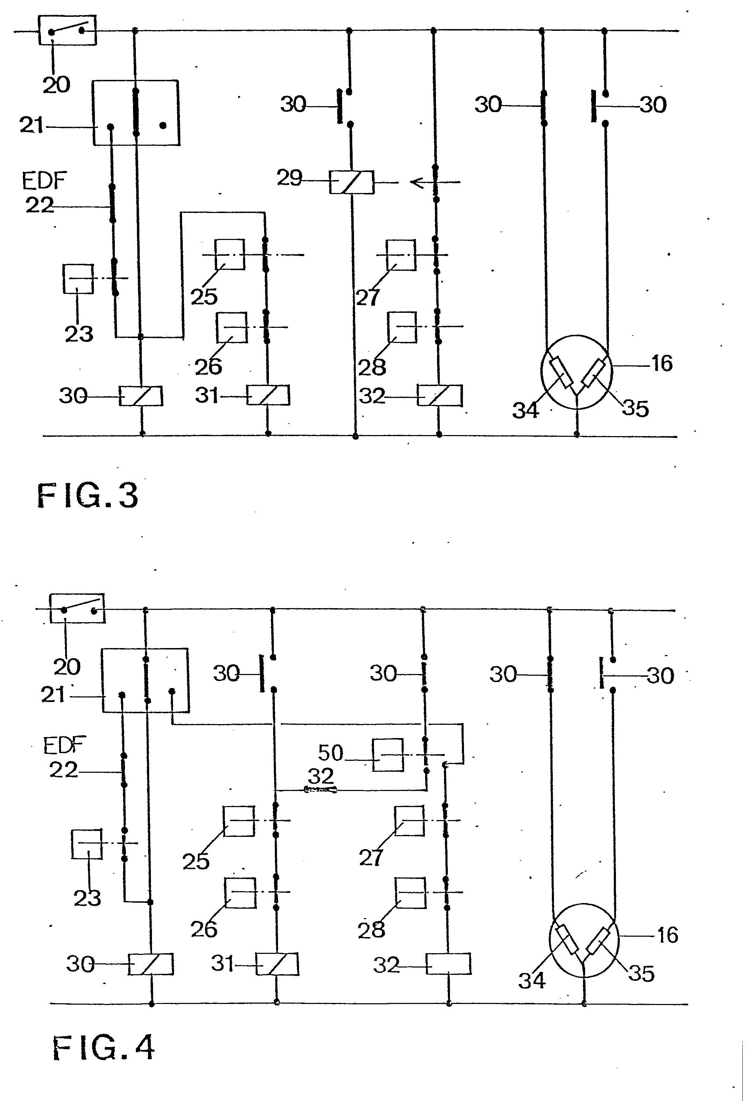

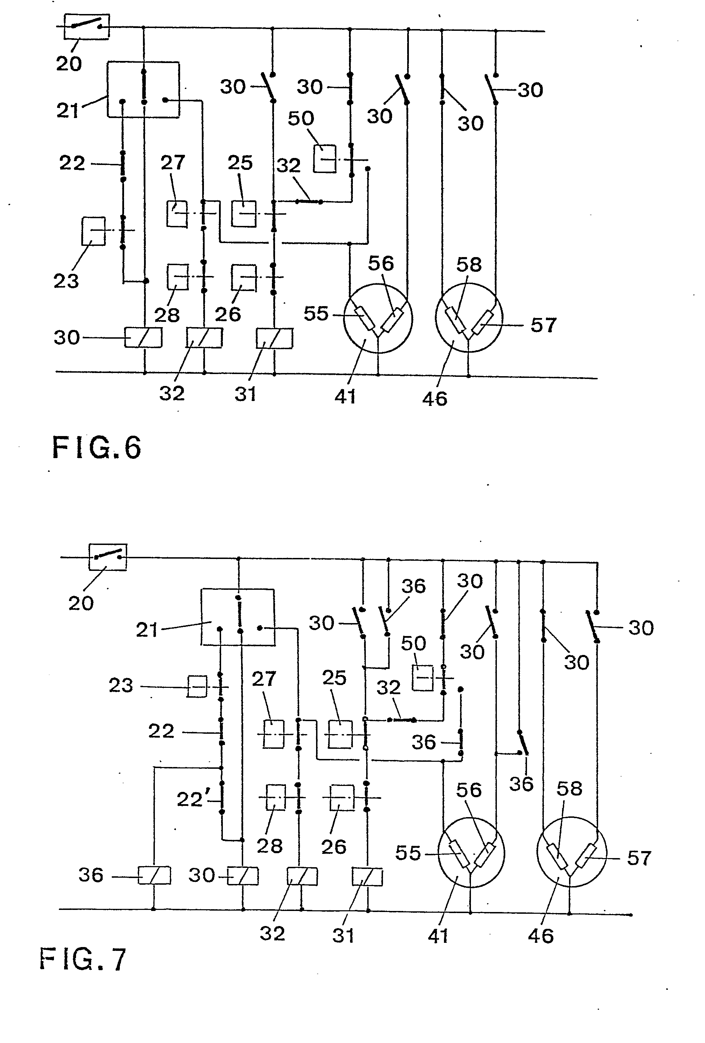

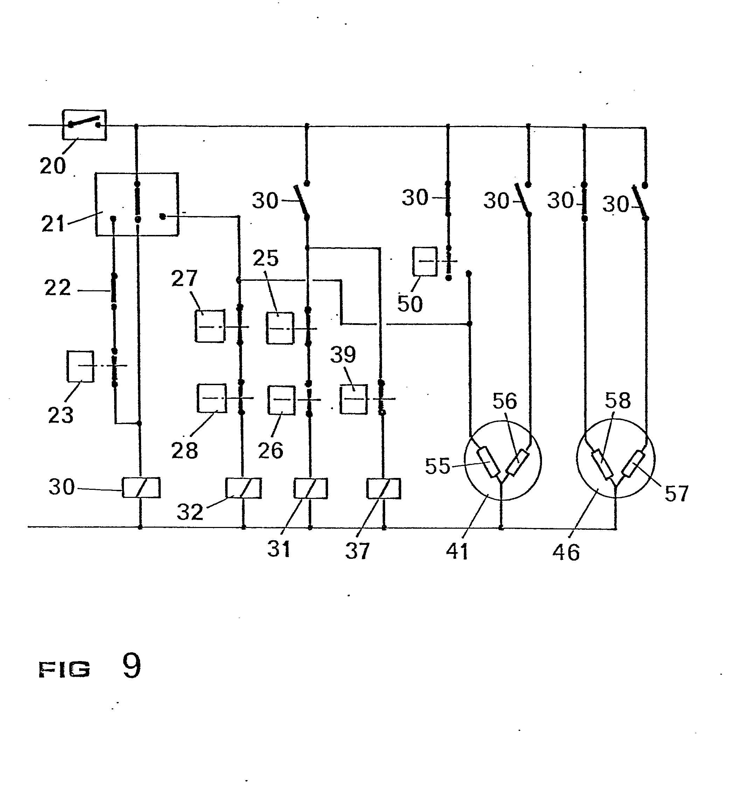

Dans les figures 3, 4, 6, 7 et 9 montrant les schémas électriques de commande, les références suivantes désignent :

- (20) : l'interrupteur général,

- (21) : un sélecteur qui en position droite, correspond à un fonctionnement exclusif sur la chaudière traditionnelle (1), en position milieu un fonctionnement exclusif sur la chaudière électrique (8) et en position gauche un fonctionnement automatique sur les deux chaudières (1) et (8) selon la période de tarification ;

- (22) : un contact de changement de tarification situé sur le relais (11) ;

- (22') : le contact du préavis du fournisseur de courant ;

- (23) : une sonde de détection de température extérieure ou une horloge ou une commande à distance ;

- (25-26) : des organes de régulation et de sécurité de la chaudière électrique (8) ;

- (27-28) : des organes de régulation et de sécurité de la chaudière traditionnelle (1) ;

- (29) : la temporisation du démarrage du brûleur (3) ;

- (30) : un relais de commutation ;

- (31) : un relais de commande de la chaudière électrique (8) et de la pompe (70);

- (32) : un relais de commande de la chaudière traditionnelle (1) ;

- (34) : le bobinage du moteur (16) de la vanne (9) permettant la rotation dans le sens assurant la circulation du fluide de retour (42) vers la chaudière traditionnelle (1) ;

- (35) : le bobinage de ce même moteur (16) assurant la circulation du fluide de retour (42) vers la chaudière électrique (8) ;

- (36) : le relais de préavis ;

- (37) : le relais commandant soit l'élément chauffant du ballon (52), soit sa pompe (54) de charge, soit l'ouverture du circuit de préchauffage indépendant (61) situé dans la chaudière (1) ;

- (39) : un organe de régulation du relais (37);

- (50) : une sonde de détection de la température de la chaudière traditionnelle (1) ;

- (55) : le bobinage du moteur (41) assurant la circulation du fluide de retour (42) vers la chaudière traditionnelle (1) ;

- (56) : le bobinage de ce même moteur (41) assurant le retour (42) vers la chaudière électrique (8) ;

- (57) : le bobinage du moteur (46) assurant la connection du départ (47) sur le départ du chauffage central (48) ;

- (58) : le bobinage du moteur (46) assurant la connection du départ (47) sur le retour (49) et (44) de la chaudière traditionnelle (1).

Le procédé et l'installation conformes à l'invention présentent de nombreux avantages par rapport aux solutions de chauffage bi-énergie proposées à ce jour. On peut citer

- la suppression des déperditions par la chaudière traditionnelle lorsque celle-ci n'est pas en service et que la chaudière électrique fonctionne;

- la réduction de l'inertie de l'ensemble;

- l'abscence de chocs thermiques et de corrosions néfastes dans la chaudière traditionnelle lorsque l'on met son brûleur en service;

- l'augmentation de la souplesse de fonctionnement;

- l'automatisme de commutation d'une chaudière sur l'autre.

Bien que l'invention ait été décrite dans une forme de réalisation avantageuse, c'est-à-dire dans son application au chauffage central, elle peut également recevoir d'autres applications dans des installations bi-énergie de production d'eau chaude ou d'un autre fluide pour des utilisations autres que le chauffage des locaux, tels que par exemple le chauffage de fluide à usage industriel.

REVENDICATIONS

1/ Procédé de chauffage bi-énergie dans lequel on fait appel à deux chaudières, d'une part une chaudière électrique (8), d'autre part une chaudière traditionnelle (1) à combustible liquide ou gazeux, ces deux chaudières (1) et (8) étant reliées chacune à un circuit de chauffage (4), du type dans lequel on ne met en fonctionnement le brûleur (3) de la chaudière traditionnelle (1) que lorsque le foyer de celle-ci a atteint une température prédéterminée permettant d'éviter la formation des condensations corrosives dans ce foyer de cette chaudière traditionnelle (1), caractérisé :

- d'une part, en ce que lorsque l'on fonctionne en régime établi avec la chaudière électrique (8), on n'irrigue pas la chaudière traditionnelle (1),

- d'autre part, en ce que avant de mettre en route le brûleur (3) de la chaudière traditionnelle (1), on réchauffe progressivement le foyer de celle-ci, de sorte qu'on amène celui-ci au niveau de ladite température prédéterminée.

2/ Procédé selon la revendication 1, caractérisé en ce que le circuit de chauffage (4) est un circuit de chauffage central.

3/ Procédé selon la revendication 2, caractérisé en ce que le préchauffage du foyer de la chaudière traditionnelle (1) s'effectue au moyen de l'eau du circuit du chauffage central (4).

4/ Procédé selon la revendication 3, caractérisé en ce que le préchauffage s'effectue au moyen de l'eau du circuit de retour (42) du chauffage central (4).

5/ Procédé selon l'une des revendications 1 à 4, caractérisé en ce que la programmation du préchauffage du foyer de la chaudière traditionnelle (1) qui intervient au changement d'énergie est commandée par un moyen choisi dans le groupe constitué par :

- le changement de tarification du fournisseur du courant électrique, éventuellement avec préavis,

- une sonde extérieure (23) de prise de température,

- l'association de ces deux moyens,

- l'obligation par l'utilisateur de libérer la puissance électrique pour d'autres usages.

6/ Procédé selon l'une des revendications 1 à 5, caractérisé en ce que le démarrage du brûleur (3) de la chaudière traditionnelle (1) après préchauffage, est commandé par une temporisation (29) provoquant un décalage entre le début du préchauffage et la mise en fonctionnement du brûleur (3) par le biais d'une horloge ou d'une minuterie.

7/ Procédé selon l'une des revendications 1 à 5, caractérisé en ce que le démarrage du brûleur (3) de la chaudière traditionnelle (1) après préchauffage est commandé par une prise de température (50) à la sortie de la chaudière traditionnelle (1) ou par une deuxième impulsion du fournisseur de courant électrique dans le cas d'utilisation d'un préavis.

8/ Installation de chauffage bi-énergie, du type comprenant de manière connue :

- un circuit de chauffage (4) proprement dit ;

- une chaudière traditionnelle (1) à combustible liquide ou gazeux reliée au circuit (4) du chauffage,

- une chaudière électrique (8) reliée au même circuit de chauffage (4),

- un organe de commande électrique (10) qui peut être relié respectivement :

. au brûleur (3) de la chaudière traditionnelle (1),

. à la chaudière électrique (8),

. à un contact (22) commandé par le fournisseur de courant électrique ou par l'utilisateur,

. à une sonde (23) de détection de la température extérieure, dans le cas de chauffage central;

. à une sonde (50) de détection de la température de la chaudière traditionnelle (1),

. voire à un circulateur supplémentaire (70) d'accélération du préchauffage,

- éventuellement, un ballon tampon accumulateur (52), caractérisé en ce qu'elle comporte en outre :

- un système de vannes (9-40-45) placée sur le circuit (4)
du chauffage central aptes à mettre :

. hors circuit la chaudière traditionnelle (1),

. hors circuit la chaudière électrique (8),

. en série l'une (1) et l'autre (8) de ces chaudières,

. en service le ballon accumulateur tampon optionnel (52),

- un moyen de motorisation (16-41-46) dudit système
de vannes (9-40-45) connecté à l'organe de commande
électrique (10) de façon à permettre la manoeuvre automatique de ce système de vannes et le fonctionnement du
brûleur (3) ou de la chaudière électrique (8) selon
l'énergie et l'organe de chauffage utilisé,

- un moyen apte à réchauffer le foyer de la chaudière
traditionnelle (1) avant le démarrage du brûleur (3)
de celle-ci.

9/ Installation selon revendication 8, caractérisée en
ce que la chaudière électrique (8) est placée sur le circuit de retour
du chauffage (4) et est disposée juste en amont de cette vanne trois
voies (9) elle-même disposée juste en amont de la chaudière traditionnelle (1).

10/ Installation selon l'une des revendications 8 et 9, caractérisée en ce que le système de vannes est formé par au moins une vanne
trois voies (9-40-45).

11/ Installation selon l'une des revendications 8 à 10, caractérisée en ce que l"organe de commande électrique (10) est intégré dans
l'enceinte même de la chaudière électrique (8).

FIG.1

FIG.2

0061410

0061410

FIG.3

FIG.4

FIG.5

FIG.6

FIG.7

FIG 8

FIG 9

FIG 10

**RAPPORT DE RECHERCHE EUROPEENNE**

**0061410**

Numéro de la demande

EP 82 42 0035

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| .A | DE - A - 1 951 487 (ECKERFELD)<br><br>* page 2, paragraphe 3, page 6, paragraphe 2; page 7, paragraphe 1; figure 4 *<br><br>-- | 1,2,8 | F 24 D 19/10<br>F 24 D 3/00 |
| D,A | DE - A - 2 021 579 (BROCKERHOFF)<br><br>* page 7, paragraphe 4 - page 8, paragraphe 1 *<br><br>-- | 1-5,8, 9 | |
| D,A | DE - A - 2 657 161 (BUDERUS) | | |
| A | FR - A - 867 699 (MARON)<br><br>------ | | |

DOMAINES TECHNIQUES RECHERCHES (Int. Cl. ³)

F 24 D
F 24 H

Le présent rapport de recherche a été établi pour toutes les revendications

| Lieu de la recherche | Date d'achèvement de la recherche | Examinateur |
|---|---|---|
| La Haye | 29-06-1982 | VAN GESTEL |